# EUROPEAN PATENT APPLICATION

(11) **EP 4 703 943 A1**
(43) Date of publication of application: **04.03.2026**
(21) Application number: 25197690.8
(22) Date of filing: 22.08.2025
(51) Int. Cl.: G06F 21/62, H04L 9/40, H04L 67/52

(54) **INFORMATION PROCESSING APPARATUS, INFORMATION PROCESSING SYSTEM, INFORMATION PROCESSING METHOD, AND PROGRAM**

(30) Priority: 27.08.2024 JP 2024145893
(71) Applicant: Casio Computer Co., Ltd., Tokyo 151-8543 (JP)
(72) Inventor: TANAKA, Kei, Tokyo, 205-8555 (JP)
(74) Representative: Plougmann Vingtoft a/s

(57) **Abstract**

An information processing apparatus includes: a processor that, when receiving a service use request from a user, executes notification processing for notifying a guardian of the user that the user starts to use a service when it is determined that an age of the user is within a predetermined age range.

## Description

### CROSS-REFERENCE TO RELATED APPLICATIONS

The present application claims priority based on Japanese Patent Application No. 2024-145893 filed on August 27, 2024, the entire contents of which are incorporated herein.

### TECHNICAL FIELD

The present disclosure relates to an information processing apparatus, an information processing system, an information processing method, and a program.

### RELATED ART

For example, JP 2001-222589 A discloses that in a case where a minor tries to perform an account transfer contract alone, it is determined whether or not to proceed with contract processing based on whether or not information input by the minor matches information transmitted by a guardian of the minor.

### SUMMARY

Examples of a service provided using the Internet include a service used through an application installed in a mobile terminal such as a smartphone or a tablet terminal. In the technique disclosed in JP 2001-222589 A, the minor who makes an account transfer contract merely makes a transmission request of account information and authentication information to the guardian via a phone call or the like, and it is not possible to notify the guardian of the user that the use of the service is started by the user who is a minor.

The present disclosure has been made in view of the above circumstances, and an object of the present disclosure is to provide a technique capable of appropriately notifying a guardian that use of a service by a user has started.

An information processing apparatus according to an embodiment includes: a processor that, when receiving a service use request from a user, executes notification processing for notifying a guardian of the user that the user starts to use a service when it is determined that an age of the user is within a predetermined age range.

### BRIEF DESCRIPTION OF THE DRAWINGS

FIG. 1 is a block diagram illustrating a configuration example of a content providing system according to a first embodiment;
FIG. 2 is a block diagram illustrating a configuration example of a user terminal according to the first embodiment;
FIG. 3A is a table for explaining an example of region-specific notification-required age information;
FIG. 3B is a table illustrating a specific example of a notification-required age;
FIG. 4 is a sequence diagram for explaining an example of processing performed in the content providing system according to the first embodiment;
FIG. 5 is a diagram (part 1) for explaining an example of a display screen of the user terminal;
FIG. 6 is a diagram (part 2) for explaining the example of the display screen of the user terminal;
FIG. 7 is a diagram for explaining an example of an email transmitted to a guardian terminal;
FIG. 8 is a diagram for explaining a first modification of the display screen at the time of age verification;
FIG. 9 is a diagram (FIG. 9A) for explaining a second modification of the display screen at the time of age verification and a table (FIG. 9B) illustrating a relationship between display of buttons and processing content;
FIG. 10 is a sequence diagram for explaining a modification of processing performed in the content providing system according to the first embodiment;
FIG. 11 is a block diagram illustrating a configuration example of a content providing system according to a second embodiment;
FIG. 12 is a block diagram illustrating a configuration example of the user terminal according to the second embodiment;
FIG. 13 is a sequence diagram for explaining an example of processing performed when the user terminal downloads a program in the content providing system according to the second embodiment; and
FIG. 14 is a flowchart for explaining an example of processing performed when the user terminal according to the second embodiment executes a program.

### DETAILED DESCRIPTION

Hereinafter, embodiments of the present disclosure will be described with reference to the drawings. The term "service" in the present specification may be a service that provides predetermined content to a user of a user terminal by executing an application program installed in the user terminal. This type of service can be provided using a communication network such as the Internet. The service may be, for example, a learning support service using a mobile terminal such as a smartphone or a tablet terminal, a distribution service of a moving image, music, or the like, an online game, or the like. In the learning support service, for example, content such as an electronic dictionary (Japanese dictionary, English-Japanese dictionary, Japanese-English dictionary, or the like), a scientific calculator, and an electronic sticky note is provided. The service may be providing (distributing) an application program operable on the user terminal as content. The service may relate to payment of a purchase price and a usage fee of content. In addition, the term "guardian" in the present specification may refer to a person with parental authority, a statutory guardian of a minor, or any other person who has a duty or position to protect a minor.

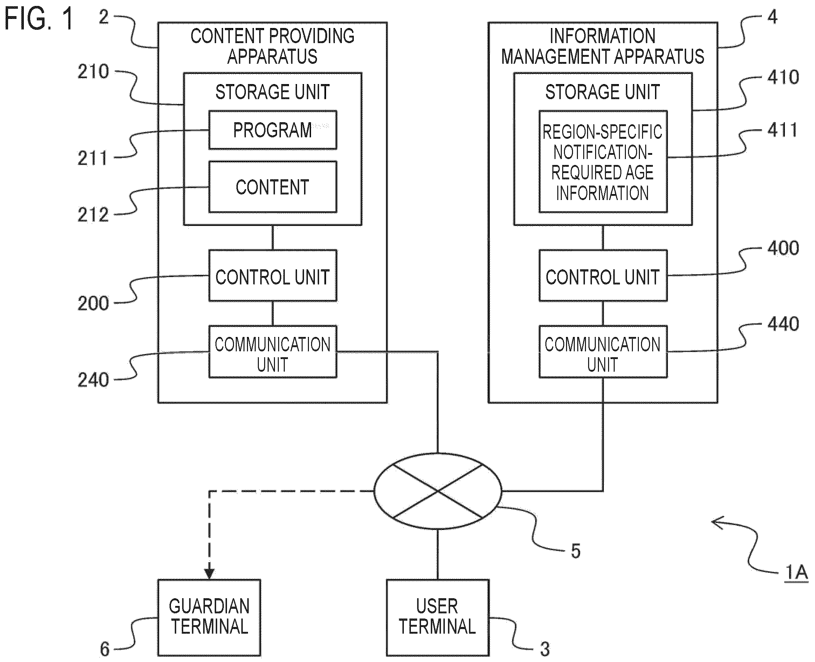

A content providing system 1A according to the first embodiment illustrated in FIG. 1 includes a content providing apparatus 2, a user terminal 3, and an information management apparatus 4 which are communicably connected via a communication network 5 such as the Internet. The content providing apparatus 2 can be a content server that provides predetermined content to the user of the user terminal 3, and includes a processor 200, a storage 210, and a communication unit 240. The processor 200 controls the operation of the content providing apparatus 2. The processor 200 can be at least one central processing unit (CPU) or the like that executes a control program. In addition to the control program executed by the processor 200, the storage 210 stores an application program 211 to be installed in the user terminal 3, content 212 to be provided to the user, and the like. The storage 210 includes a read only memory (ROM) and a random access memory (RAM) as at least one main storage device, and may further include an auxiliary storage device such as a hard disk drive (HDD) and a solid state drive (SSD). The communication unit 240 connects the content providing apparatus 2 to the communication network 5 by wired or wireless communication, and communicates with the user terminal 3 or the like via the communication network 5. The communication unit 240 may be any known communication device capable of transmitting and receiving data in accordance with a communication standard applied to communication with the user terminal 3 or the like via the communication network 5.

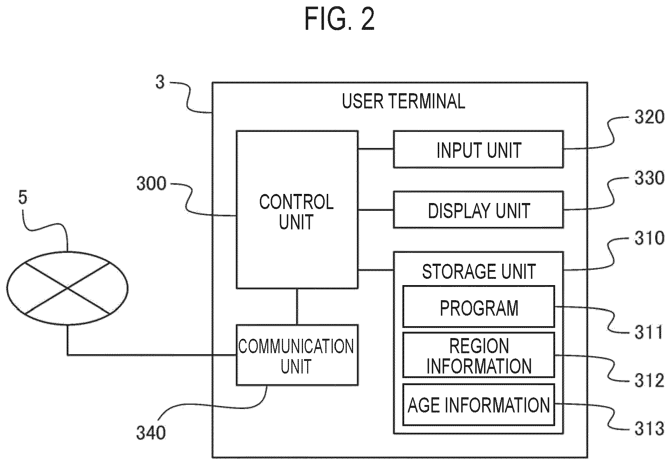

The user terminal 3 is an information processing apparatus that can use content provided by the content providing apparatus 2 by executing an application program downloaded from the content providing apparatus 2 and installed. The user terminal 3 can be, for example, a mobile terminal such as a smartphone or a tablet terminal. The user terminal 3 may be a stationary (desktop) personal computer or the like. As illustrated in FIG. 2, the user terminal 3 includes a control unit 300, a storage 310, an input unit 320, a display unit 330, and a communication unit 340.

The control unit 300 controls the operation of the user terminal 3. The control unit 300 can be a processor that executes a control program. In addition to the control program executed by the processor, the storage 310 stores an application program 311 for using content, region information 312, age information 313, and the like. The storage 310 includes a ROM and a RAM as main storage devices, and may further include auxiliary storage devices such as an HDD and an SSD. The input unit 320 accepts input operation of various types of information to the user terminal 3 by the user. The display unit 330 displays various types of information associated with the operation of the user terminal 3. The function of the input unit 320 and the function of the display unit 330 may be provided by, for example, a touch panel display mounted on a mobile terminal. The input unit 320 may include a camera, a microphone, a device that acquires position information of the user terminal 3, and the like. The communication unit 340 connects the user terminal 3 to the communication network 5 by wired or wireless communication, and communicates with the content providing apparatus 2 or the like via the communication network 5. The communication unit 340 may be any known communication device capable of transmitting and receiving data according to a communication standard applied to communication with the content providing apparatus 2 or the like via the communication network 5.

The information management apparatus 4 is an information processing apparatus that manages and provides age information used for determining whether or not it is required to notify a guardian of the user of the user terminal 3 that the user uses content provided by the content providing apparatus 2. The information management apparatus 4 according to the first embodiment can further notify the guardian of the user of the user terminal 3 that the user starts to use the content, in response to the request from the user terminal 3. The information management apparatus 4 includes a control unit 400, a storage 410, and a communication unit 440. The control unit 400 controls the operation of the information management apparatus 4. The control unit 400 can be a processor that executes a control program. The storage 410 stores region-specific notification-required age information 411 and the like in addition to the control program executed by the processor. The storage 410 includes a ROM and a RAM as main storage devices, and may further include auxiliary storage devices such as an HDD and an SSD. The communication unit 440 connects the information management apparatus 4 to the communication network 5 by wired or wireless communication, and communicates with the user terminal 3 or the like via the communication network 5. The communication unit 440 can transmit data for enabling the guardian of the user of the user terminal 3 to browse a notification by using the guardian terminal 6. The communication unit 440 may be any known communication device capable of transmitting and receiving data in accordance with a communication standard applied to communication with the user terminal 3 or the like via the communication network 5.

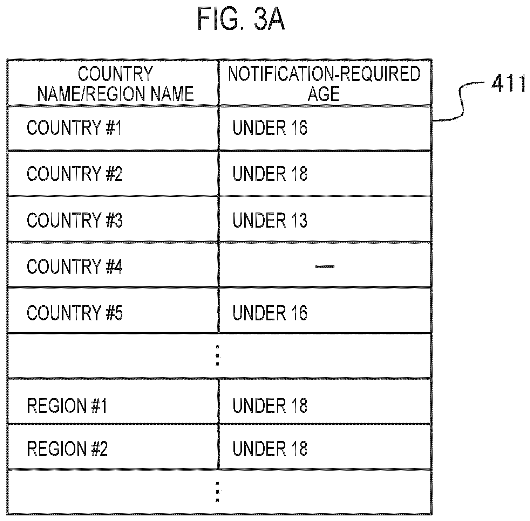

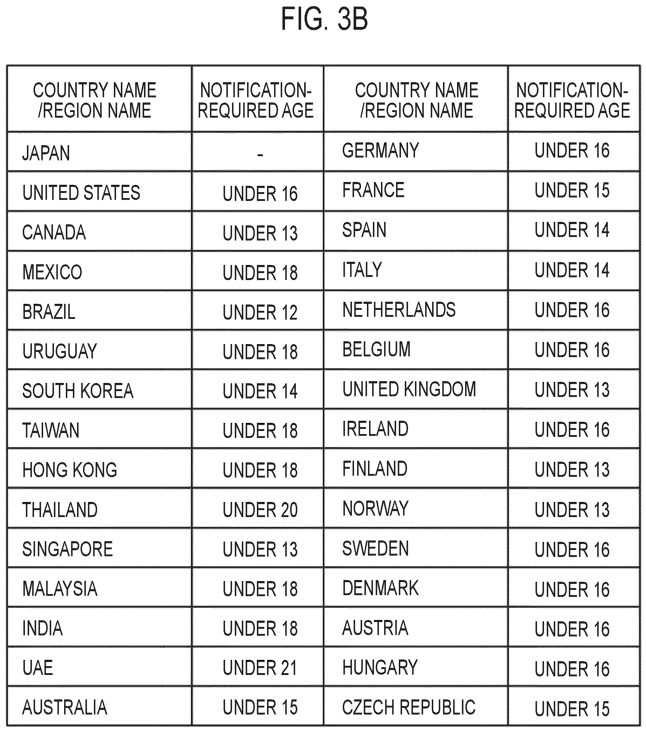

For example, as illustrated in FIG. 3A, the region-specific notification-required age information 411 stored in the storage 410 includes information indicating, for each country and region around the world, the age range (notification-required ages) of the user for which the guardian of the user is to be notified of the user's use of content. "Country name/region name" in FIG. 3A may be information for specifying a region in which the user uses the content, and "country #1", "region #1", and the like in the column of "country name/region name" may be, for example, common names of the country name and the region name in the actual region-specific notification-required age information 411. The country corresponding to the country name registered in "country name/region name" and the region corresponding to the region name may be independent regions that do not geographically overlap with each other. The age range in the column of "notification-required age" in FIG. 3A may be, for example, an age range for which notification to the guardian is mandated by laws or the like of the corresponding country or region, and "-" indicates that the guardian may not be notified regardless of age. FIG. 3B illustrates notification-required ages in 30 actual countries and regions. In the region-specific notification-required age information 411, for example, countries and regions in which the notification-required age is one common age, among countries and the regions in which the notification-required age is set, may be grouped together under a name such as "others". As a specific example, the region-specific notification-required age information 411 may include information indicating the notification-required age for each of the countries and regions in which the notification-required age is not under 16 and the countries and regions where no notification-required age is set, and information in which "country name/region name" is "others" and the notification-required age is associated with "under 16". In this example, in the table of FIG. 3B, "United States", "Germany", "Netherlands", and the like in which the notification-required age is under 16 are classified into the countries with the country name/region name of "others" in the region-specific notification-required age information 411. In this way, the information amount of the region-specific notification-required age information 411 can be reduced, and the time required for the search can be shortened.

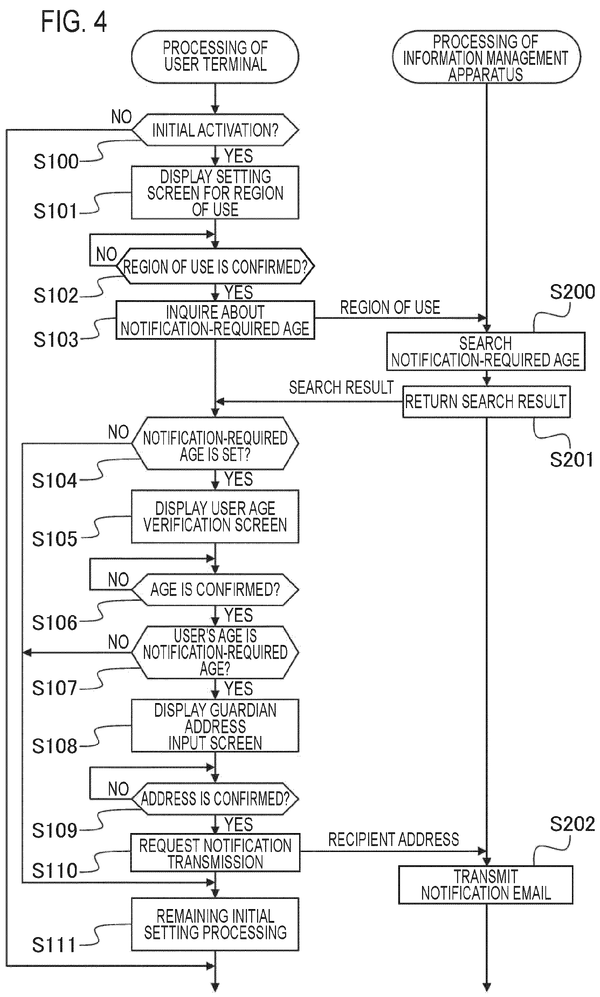

The user terminal 3 can download the application program 211 from the content providing apparatus 2 and install the application program in the user terminal 3 in order to use the content provided by the content providing apparatus 2. The application program 311 illustrated in the user terminal 3 of FIG. 2 can be a program that can be executed to use content after the application program 211 is installed. In the following description, the application program 311 installed in the user terminal 3 is referred to as a "program 311". When the user of the user terminal 3 performs an operation of executing (starting) the program 311 on the user terminal 3, the user terminal 3 performs the processing illustrated in FIG. 4. The processing of the user terminal 3 illustrated in FIG. 4 is mainly performed by the control unit 300.

First, the user terminal 3 determines whether or not the execution of the program 311 in the own device is the first time (initial activation) (step S100). In step S100, in a case where the initial setting processing (steps S101 to S111) required to use the content is not completed, the control unit 300 of the user terminal 3 determines that it is the initial activation. In a case where it is determined that it is not the initial activation (step S100; NO), the user terminal 3 skips the processing of steps S101 to S111, and executes the activation processing of the program 311 (not illustrated). In a case where it is determined that it is the initial activation (step S100; YES), the user terminal 3 performs the processing of step S101 and subsequent steps. The determination in step S100 described above is an example of processing of determining whether or not the user terminal 3 has accepted a request for using content (service) from the user.

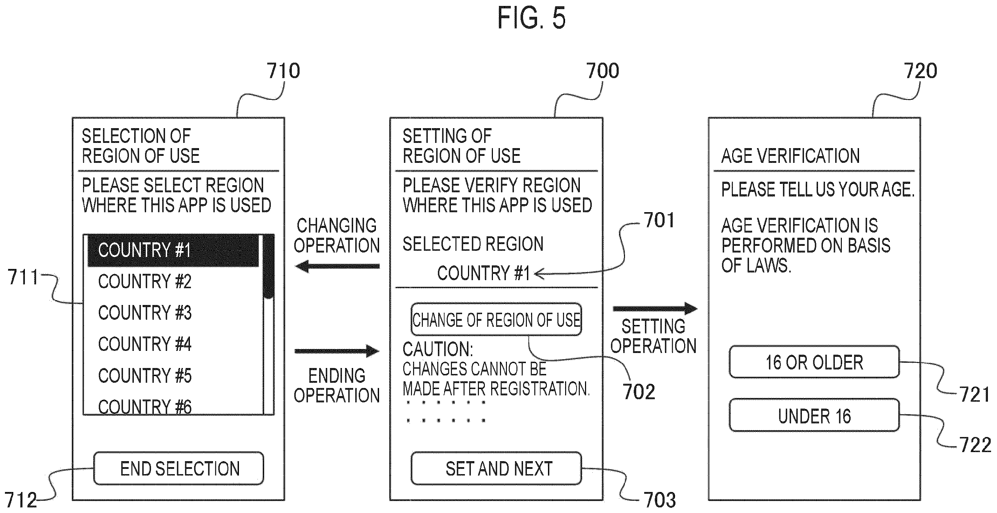

In the case of performing the processing of step S101 and subsequent steps, the control unit 300 causes the display unit 330 to display a setting screen for a region of use (step S101), and waits for the setting of the region of use to be confirmed (step S102; NO). As an example, the control unit 300 causes the display unit 330 to display a setting screen 700 for the region of use illustrated in FIG. 5. The setting screen 700 includes a region display area 701 in which a selected country or region is displayed, a button 702 for shifting to a selection screen for the region of use, and a button 703 for completing the setting of the region of use. The setting screen 700 may include a caution and the like regarding the setting of the region of use. In the example of the setting screen 700 illustrated in FIG. 5, character information in the screen is described in Japanese, but the character information in the setting screen 700 may be described in a language selected by the user such as English. The same applies to character information described in the screen in the drawing or a notification email 8 referred to in the following description.

When the user of the user terminal 3 performs an operation of pressing the button 702, for example, a selection screen 710 for the region of use illustrated in FIG. 5 is displayed on the display unit 330. The selection screen 710 includes a list 711 of settable country names and region names, and a button 712 for ending the selection of the region of use. In the list 711, the country name and the region name displayed in the screen can be changed by a scroll operation, and one country name or region name selected by the user operation is displayed in a display format different from other country names and region names. The combination of the country name and the region name in the list 711 may be the same as or different from the combination of the country name and the region name in the region-specific notification-required age information 411 described above. For example, the country name and the region name which are classified into "others" in the region-specific notification-required age information 411 may be included in the list 711. When the user performs an operation of pressing the button 712, the display screen of the display unit 330 returns to the setting screen 700 for the region of use, and the country name or the region name selected on the selection screen 710 is displayed in the region display area 701. Until detecting an operation of the user pressing the button 703 on the setting screen 700 for the region of use, the user terminal 3 determines that the setting of the region of use is not completed (step S102; NO). When detecting the operation of the user pressing the button 703 on the setting screen 700 for the region of use, the user terminal 3 determines that the setting of the region of use is completed (step S102; YES), and transmits a message inquiring about the notification-required age to the information management apparatus 4 (step S103).

The message transmitted in step S103 is not limited to a message in a specific format as long as the information for identifying the user terminal 3 and the information indicating the region of use are described in a format readable by the information management apparatus 4. Upon receiving the message from the user terminal 3, the information management apparatus 4 searches the region-specific notification-required age information 411 by using, as a search key, the information indicating the region of use included in the message (step S200), and returns the search result to the user terminal 3 (step S201). In a case where the notification-required age is set in the region of use used as the search key, the information management apparatus 4 returns a message including information indicating the set notification-required age (for example, "under 16") to the user terminal 3. In a case where the notification-required age is not set in the region of use used as the search key (for example, in the case of "-" illustrated in FIG. 3A), the information management apparatus 4 returns, to the user terminal 3, a message including information indicating that the notification-required age is not set.

Upon receiving the search result from the information management apparatus 4, the user terminal 3 determines whether or not the notification-required age is set for the set region of use, on the basis of the received search result (step S104). In a case where it is determined that the notification-required age is not set (step S104; NO), the user terminal 3 skips the processing of steps S105 to S110 and performs the remaining initial setting processing (step S111). In a case where it is determined that the notification-required age is set (step S104; YES), the user terminal 3 displays a user age verification screen (step S105), and waits for the user's age to be confirmed (step S106; NO). As an example, the control unit 300 of the user terminal 3 causes the display unit 330 to display an age verification screen 720 illustrated in FIG. 5. The age verification screen 720 includes a message notifying the user that age verification is required and buttons 721 and 722 for the age verification. In a case where the notification-required age provided from the information management apparatus 4 is under 16, the button 721 of "16 or older" and the button 722 of "under 16" are displayed on the age verification screen 720. In a case where the notification-required age is under X not under 16, a button of "X or older" and a button of "under X" are displayed on the age verification screen 720. Until detecting an operation of pressing one of the buttons 721 and 722, the user terminal 3 determines that the user's age is not confirmed (step S106; NO). When detecting the operation of the user pressing one of the buttons 721 and 722 on the age verification screen 720, the user terminal 3 determines that the user's age has been confirmed (step S106; YES), and determines whether or not the user's age is the notification-required age (step S107).

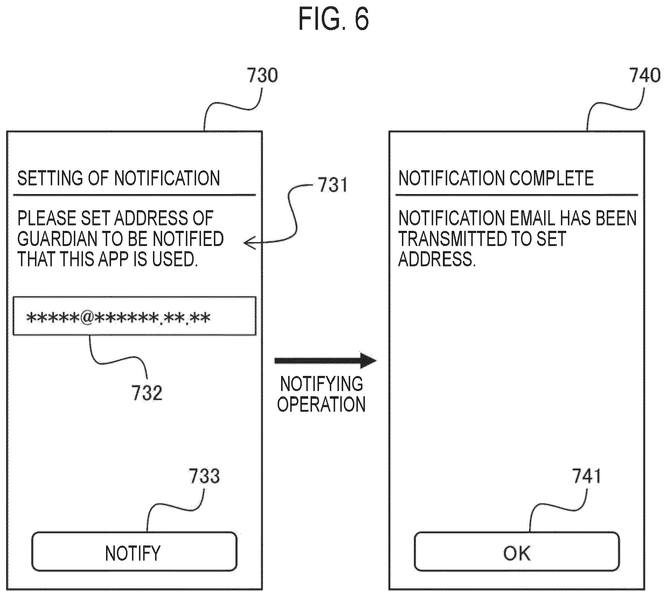

In step S107, the control unit 300 of the user terminal 3 determines, for example, whether or not the detected operation is an operation of pressing the button 722 corresponding to the notification-required age. In a case where it is determined that the detected operation is not the operation of pressing the button 722 (step S107; NO), the user terminal 3 skips the processing of steps S108 to S110 and performs the remaining initial setting processing (step S111). In a case where it is determined that the detected operation is the operation of pressing the button 722 (step S107; YES), the user terminal 3 displays a guardian address input screen (step S108), and waits for the address to be confirmed (step S109; NO). As an example, the control unit 300 of the user terminal 3 causes the display unit 330 to display a guardian address input screen 730 illustrated in FIG. 6. The guardian address input screen 730 includes a message 731 notifying the user that it is required to notify the guardian, a text box 732 for inputting an address, and a button 733 for executing the notification. The address input in the text box 732 may be any information as long as the information specifies a method by which the guardian can view a notification by using the guardian terminal 6 (see FIG. 1), and is not limited to the email address illustrated in FIG. 6, and may be contact such as another address or a telephone number used when a short message is sent on a mobile terminal. Until detecting an operation of pressing the button 733 on the guardian address input screen 730, the user terminal 3 determines that the address is not confirmed (step S109; NO).

When detecting the operation of the user pressing the button 733 on the guardian address input screen 730, the user terminal 3 determines that the address has been confirmed (step S109; YES), the information management apparatus 4 is requested to transmit a notification email to the guardian of the user (step S110). In step S110, the user terminal 3 transmits, to the information management apparatus 4, a notification request including, as a recipient address, an email address input in the text box 732. Upon receiving the notification request from the user terminal, the information management apparatus 4 transmits, to the guardian of the user of the user terminal 3, an email notifying that the user starts to use the content, by using the recipient address included in the received notification request (step S202). In addition, the user terminal 3 may display a push notification in an application in which the address input in the text box 732 is registered in advance. Although not illustrated in FIG. 4, the information management apparatus 4 transmits, to the user terminal 3, a message reporting the transmission completion after the transmission processing of the notification email is completed. Upon receiving the transmission completion report, the user terminal 3 displays, for example, a transmission completion screen 740 illustrated in FIG. 6 on the display unit 330. The transmission completion screen 740 includes a verification button 741, and when detecting an operation of pressing the verification button 741, the user terminal 3 performs the remaining initial setting processing (step S111).

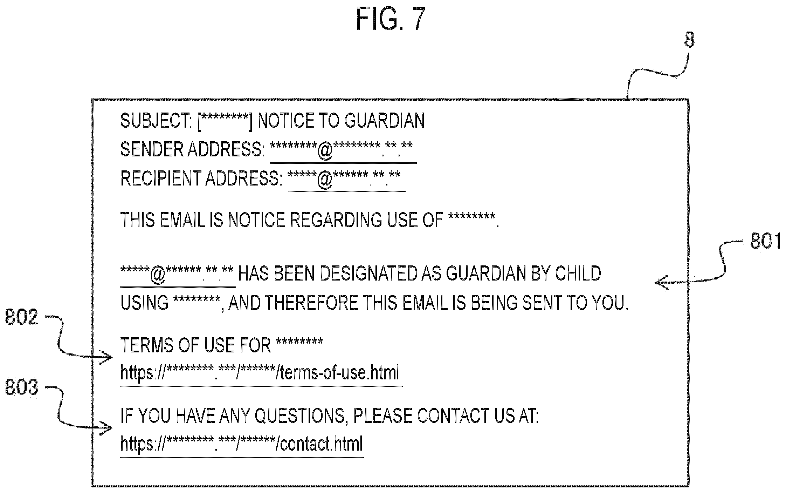

In step S202, the information management apparatus 4 transmits the notification email 8 as illustrated in FIG. 7, for example. A sender address in the notification email 8 may be, for example, a return address of an error email set by the provider of the content provided by the content providing apparatus 2. The text of the notification email 8 includes a message 801 notifying that the recipient has been designated as the guardian by the user of the content, information 802 indicating the URL of the terms of use for the content, and information 803 indicating the URL of the inquiry destination. By transmitting such a notification email 8 to the guardian, the guardian of the user (minor) can know at an early stage that the user starts to use the content even in a case where the guardian is at a place geographically separated from the user. In addition, on the basis of the information described in the notification email 8, the guardian can check what type of content the user uses, the terms of use for the content, and the like by using the guardian terminal 6. For this reason, for example, the guardian can take a measure such as restricting the use of content that is not preferable for the user. Note that the notification email 8 in FIG. 7 is merely an example of a means for notifying the guardian of the user that the user starts to use the content. The notification from the information management apparatus 4 to the guardian is not limited to a specific format as long as the guardian can grasp that the user starts to use the content.

In addition, in the processing described above with reference to FIG. 4, when the user of the user terminal 3 operates the user terminal 3 to set the region of use of the content, the user terminal 3 inquires the information management apparatus 4 about the age required to notify the guardian of the user in the set region of use, and verifies the age of the user. In addition, in a case where the user is at an age required to notify the guardian, the user terminal 3 requests the information management apparatus 4 to notify the guardian of the notification email 8 or the like by using an address (contact) input by the user. In other words, at the time of receiving the content use request from the user, when the user terminal 3 determines that the age of the user is within the range of the notification-required age, the user terminal 3 executes notification processing (S108 to S110) for notifying the guardian of the user that the user starts to use the content. Note that the notification processing performed by the user terminal 3 is intended to be processing of requesting the information management apparatus 4 to notify the guardian of the user as described above. When the user terminal 3 and the information management apparatus 4 cooperate with each other in this manner, it is possible to appropriately notify the guardian that the use of the content (service) by the user has started. That is, according to the content providing system 1A, it is possible to reliably support the user in executing a technical task by an interaction process between the user and machine (prevent the service from being provided without obtaining the grounds of consent of the guardian to acquire personal information, by appropriately notifying the guardian that the use of the service by the user has started).

The user terminal 3 according to the first embodiment is an example of the information processing apparatus that, when receiving the content use request from the user, performs notification processing for notifying the guardian of the user that the user starts to use the content, when the age of the user is within a predetermined age range. The notification processing performed by the user terminal 3 as the information processing apparatus is not limited to the processing described above with reference to FIGS. 4 to 7. The display screen to be displayed on the display unit 330 when the user terminal 3 performs the notification processing, the user's operation according to the display screen, and the like can be appropriately changed. For example, a region where the user uses the content is determined by using a global positioning system (GPS) or the like.

The setting may be possible on the basis of the position information of the user terminal 3 detected by the user terminal 3. The input of information by the input unit 320 for selection of the region of use, the verification of the user's age, the input of the contact (address) of the guardian, and the like is not limited to input by a hardware keyboard or a software keyboard, and may be voice input, image input, and the like.

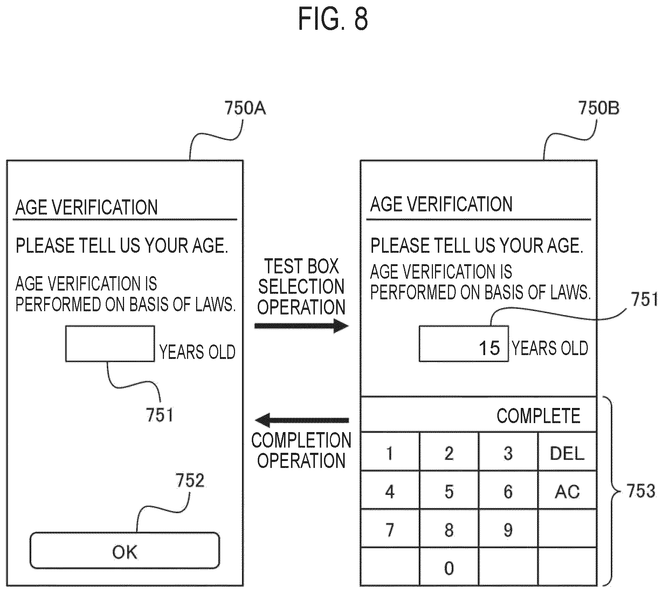

In addition, in step S105 of FIG. 4, the control unit 300 of the user terminal 3 may display an age verification screen 750A for inputting an age in a text box 751 illustrated in FIG. 8. When the user of the user terminal 3 performs an operation for inputting the age in the text box 751, the control unit 300 changes the screen to be displayed on the display unit 330 to an age verification screen 750B including an input pad 753 that receives the operation of inputting the age. When "complete" displayed at the upper right of the input pad 753 is pressed after the age is input by pressing the numeric button of the input pad 753, the input of the user's age is completed, and the age verification screen 750A including a verification button 752 is displayed. When the verification button 752 is pressed, the control unit 300 determines whether or not the input age is less than the minimum value of the age range in which notification to the specified guardian is unnecessary, on the basis of the notification-required age acquired from the information management apparatus 4. In a case where it is determined that the age is less than the minimum value, the user terminal 3 performs the processing of steps S108 to S110 of FIG. 4. By adopting such an age verification method, it is possible to avoid a situation where a notification email to be transmitted from the information management apparatus 4 to the guardian is not transmitted due to a button press error or the like. Note that the method of inputting the age (numerical value) by the user is not limited to the method of operating the input pad 753, and may be, for example, a method of selecting the age from a plurality of consecutive integers displayed in a pull-down menu. Furthermore, the age of the user is not limited to the numerical value indicating the age input or selected by the user, and may be, for example, a numerical value derived on the basis of the date of birth input by the user and the date on which the processing is performed.

In addition, the user terminal 3 according to the first embodiment may, in step S100 of FIG. 4, determine whether or not the content use request is received from the user (step S100; YES) or the content use request is not received from the user (step S100; NO), instead of determining whether it is the initial activation. For example, the program 311 executed by the user terminal 3 may be content executed on a web browser, and the content use request may be, for example, processing of accessing a web site that provides content by using the web browser and registering the use of the content executed on the web browser. In this example, when the user terminal 3 determines that the content use request is not accepted from the user (step S100; NO), step S111 in FIG. 4, and other processing related to the use of the content are not performed. In other words, steps S100 and S111 in FIG. 4 are processing steps that can be omitted, and the control unit 300 of the user terminal 3 may perform the processing of steps S101 to S110 in FIG. 4 when the content use request is received from the user.

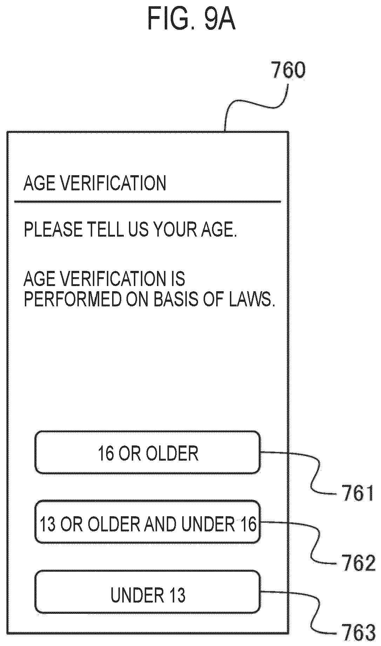

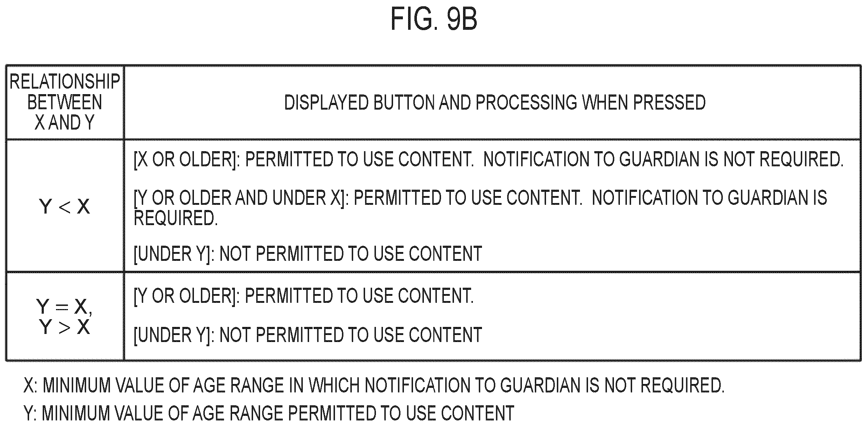

In addition, there may be a restriction on the age permitted to use the content provided by the content providing apparatus 2. In a case where there is a restriction on the age permitted for use, in step S105 of FIG. 4, the control unit 300 of the user terminal 3 may display an age verification screen 760 which also allows confirmation of whether or not the user is at the age permitted to use the content, as illustrated in FIG. 9A. The age verification screen 760 in FIG. 9A is an example of the age verification screen in a case where a magnitude relationship between a minimum value X of the age range in which the notification to the guardian is unnecessary and a minimum value Y of the age range permitted to use the content is Y < X**.** In a case where Y < X, the age verification screen 760 including three buttons 761, 762, and 763 having different age ranges is displayed on the display unit 330 according to a table illustrated in FIG. 9B. In the case of X = 16 and Y = 13, if the user is 16 years old or older, the user is permitted to use the content, and the notification to the guardian is unnecessary. In a case where the user is 13 years old or older and under 16, the user is permitted to use the content, and the notification to the guardian is required. In a case where the user is under 13 years old, the user is not permitted to use the content. On the other hand, in the case of Y = X or Y > X, if the user's age is Y or older, the user is permitted to use the content without the notification to the guardian, and if the user's age is under Y, the user is not permitted to use the content regardless of whether or not the notification to the guardian is required. Therefore, on the display unit 330, the age verification screen 760 including a button of "Y or older" and a button of "under Y" is displayed according to the table illustrated in FIG. 9B. In this manner, by displaying the age verification screen 760 which also allows confirmation of whether or not the user is at the age permitted to use the content, whether or not the user is permitted to use the content and whether or not it is required to transmit a notification email to the guardian can be determined by one operation on the age verification screen 760.

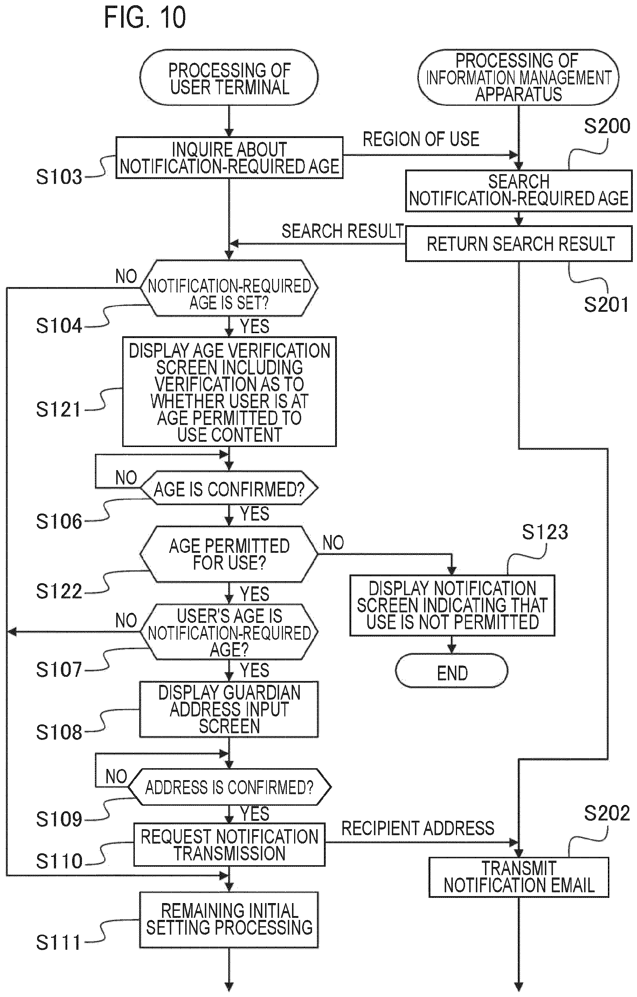

In a case where the user's age is confirmed on the age verification screen 760 described above with reference to FIGS. 9A and 9B, the user terminal 3 can perform the processing illustrated in FIG. 10. In FIG. 10, steps S100 to S102 exemplified in FIG. 4 in the processing of the user terminal 3 are omitted. In the processing of the user terminal 3 illustrated in FIG. 10, the processing in step S105 illustrated in FIG. 4 is changed to processing (step S121) of causing the display unit 330 to display the age verification screen 760 including verification as to whether the user is at the age permitted to use the content. In addition, in the processing illustrated in FIG. 10, after the user operation is performed on the age verification screen 760 and the user's age is verified, the user terminal 3 determines whether or not the user is at the age permitted to use the content (step S122). In a case where it is determined that the user is at the age permitted to use the content (step S122; YES), the user terminal 3 performs the processing of step S107 and subsequent steps. In a case where it is determined that the user is not at the age permitted to use the content (step S122), the user terminal 3 displays, on the display unit 330, a screen notifying that the content use is not permitted (step S123), and ends the processing for the content use request from the user.

In addition, in the content providing system 1A according to the first embodiment described above, the information management apparatus 4 is an example of a server including a storage that stores, for each region of use of content, an age range defined in the region of use and used for determining whether or not to notify the guardian that the user starts to use the content. That is, the user terminal 3 and the information management apparatus 4 in the content providing system 1A according to the first embodiment are examples of the information processing system that controls processing for notifying the guardian that the user of the user terminal 3 starts to use the content. In the processing in the information processing system, for example, a data format of the region-specific notification-required age information 411 stored in a storage means (storage 410) of the information management apparatus 4, a method of providing the notification-required age to the user terminal 3, and the like can be appropriately changed. For example, in the information processing system in the content providing system 1 according to the first embodiment, the processing illustrated in FIG. 4 or 10 may be performed in the user terminal 3 when the version of the program 311 executed by the user terminal 3 is upgraded, when the range of the notification-required age is changed in any of the countries and regions included in the region-specific notification-required age information 411, or the like. In addition, the information processing system that controls the processing for notifying the guardian that the user starts to use the content may be a system in which the content providing apparatus 2 performs the processing described as being performed by the information management apparatus 4 in the first embodiment. Furthermore, the user terminal 3 that executes the processing for notifying the guardian that the user starts to use the content may execute search the notification-required age in the region of use of the content by using the region-specific notification-required age information 411.

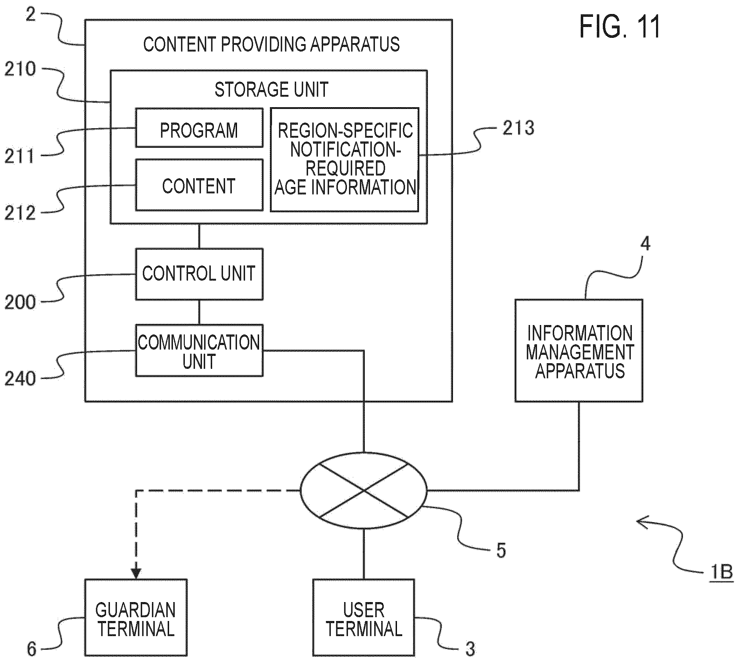

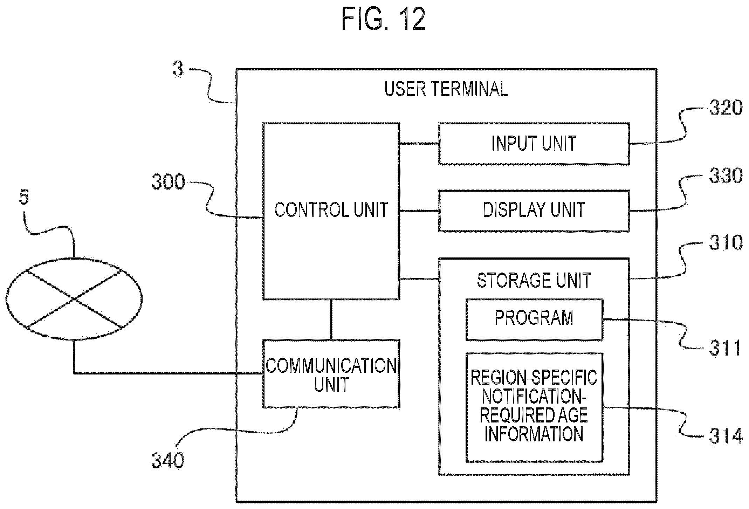

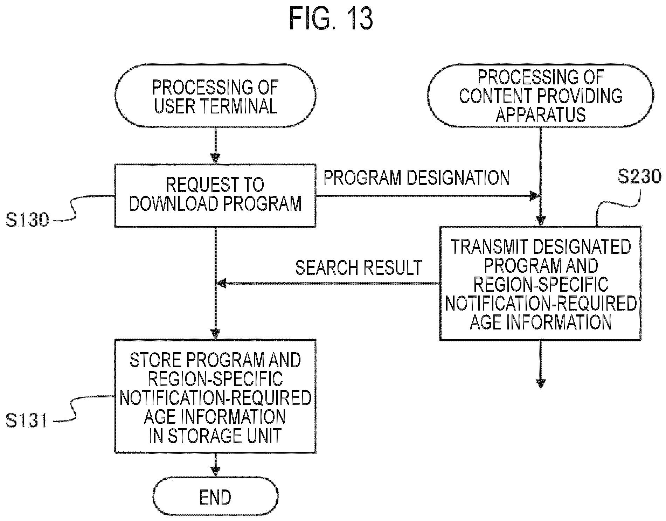

FIG. 11 illustrates a content providing system 1B according to the second embodiment. The content providing system 1B includes the content providing apparatus 2, the user terminal 3, and the information management apparatus 4. In the content providing apparatus 2 in the content providing system 1B, region-specific notification-required age information 213 is stored in the storage 210 together with the program 211 and the content 212. The region-specific notification-required age information 213 may be information acquired from the information management apparatus 4, or may be information created by the provider or the like of the content provided by the content providing apparatus 2. In the content providing system 1B, for example, as illustrated in FIG. 13, when the content providing apparatus 2 transmits (distributes) the program 211 to the user terminal 3 in response to a program download request (step S130) from the user terminal 3, the region-specific notification-required age information 213 is transmitted to the user terminal 3 together with the program 211 (step S230). Upon receiving the program 211 and the region-specific notification-required age information 213, the user terminal 3 stores them in the storage 310. As illustrated in FIG. 12, the storage 310 of the user terminal 3 installed by executing the program 211 stores the installed program 311 and the region-specific notification-required age information 314. Note that the region-specific notification-required age information 213 may be transmitted to the user terminal 3 as a part of the program 211 instead of being transmitted to the user terminal 3 as data separate from the program 211.

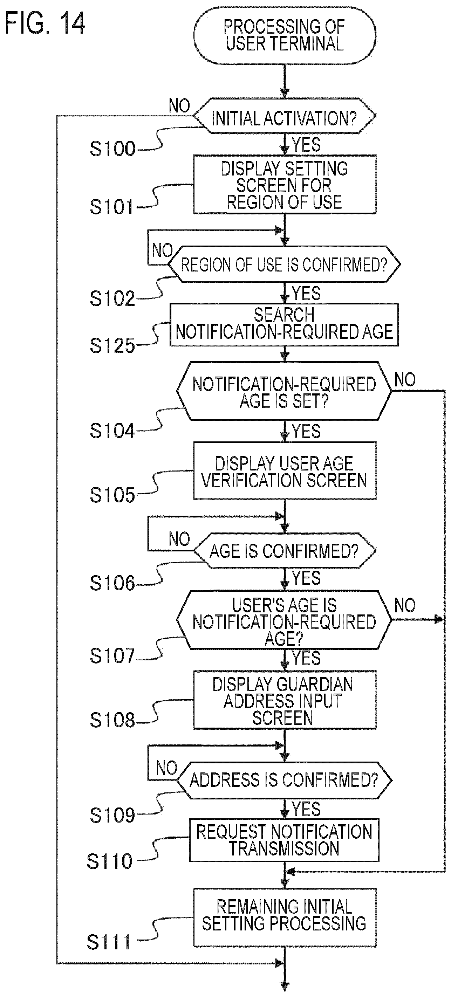

As described above, in content providing system 1B according to the second embodiment, the region-specific notification-required age information 314 is stored in the storage 310 of the user terminal 3 that executes the program 311 for using content. Therefore, the user terminal 3 according to the second embodiment can perform the processing illustrated in FIG. 14 when executing the program 311. In the processing of the user terminal 3 illustrated in FIG. 14, the processing of inquiring with the information management apparatus 4 about the notification-required age in step S103 illustrated in FIG. 4 is changed to the processing of searching the region-specific notification-required age information 314 stored in the storage 310 of the own device (step S125). In addition, in step S110 (processing of requesting transmission of the notification to the guardian of the user) illustrated in FIG. 14, the user terminal 3 transmits, to the content providing apparatus 2, a notification request including the address of the guardian. Note that steps S100 and S111 in FIG. 14 are processing that can be omitted. As described in the first embodiment, the user terminal 3 according to the second embodiment may perform the processing in steps S101 to S110 in FIG. 14 when receiving the content use request from the user. Also in the second embodiment, the program 311 executed by the user terminal 3 may be content executed on a web browser, and the content use request may be processing of accessing a web site that provides content by using the web browser and registering the use of the content executed on the web browser.

The above-described embodiments are specific examples to facilitate understanding of the invention, and the present disclosure is not limited to the above-described embodiments. Various modifications and changes of the information processing apparatus, the information processing system, the information processing method, and the program can be made without departing from the scope of the claims. For example, in the first embodiment, the server that stores the region-specific notification-required age information 411 for providing the user terminal 3 with the notification-required age is not limited to the information management apparatus 4 provided separately from content providing apparatus 2, and may be the content providing apparatus 2.

## Claims

1. An information processing apparatus comprising:
a processor that, when receiving a service use request from a user, executes notification processing for notifying a guardian of the user that the user starts to use a service when it is determined that an age of the user is within a predetermined age range.

2. The information processing apparatus according to claim 1, wherein
the processor determines whether or not the age of the user is within the predetermined age range, on a basis of an age range indicating necessity of the notification processing associated with a region where the user uses the service.

3. The information processing apparatus according to claim 1 or 2, further comprising:
a display, wherein
when receiving the service use request from the user,
the processor causes the display to display a first button including information associated with being within the predetermined age range and a second button including information associated with being outside the predetermined age range, and
in a case of detecting an operation of the user selecting the first button, the processor executes the notification processing.

4. The information processing apparatus according to claim 3, wherein
the processor causes the display to display the first button and the second button such that a combination of the information included in the first button and the information included in the second button is different between a case where a first region is selected as the region in which the user uses the service and a case where a second region different from the first region in the age range indicating necessity of the notification processing is selected.

5. The information processing apparatus according to claim 3, wherein
in the notification processing, the processor receives an input of contact of the guardian of the user, and notifies the received contact that the user starts to use the service.

6. The information processing apparatus according to claim 2, wherein
when it is determined that the user is at an age permitted to use the service and that the age of the user is within the predetermined age range, on a basis of the age range indicating the necessity of the notification processing, the processor executes the notification processing.

7. The information processing apparatus according to claim 2, further comprising:
a storage that stores region-specific age information associated with the age range indicating necessity of the notification processing for each region that is able to be set as the region where the service is used, wherein
when receiving the service use request from the user, the processor specifies a region where the user uses the service, acquires, from the region-specific age information, the age range indicating necessity of the notification processing associated with the specified region, and determines whether or not the age of the user is within the predetermined age range.

8. The information processing apparatus according to claim 1, wherein
the notification processing executed by the processor includes processing of requesting an external apparatus communicating with the information processing apparatus to notify the guardian.

9. An information processing system comprising:
an information processing apparatus including:
a processor that, when receiving a service use request from a user, executes notification processing for notifying a guardian of the user that the user starts to use a service when it is determined that an age of the user is within a predetermined age range, and
a communication unit; and
a server including:
a storage that stores region-specific age information associated with an age range indicating necessity of the notification processing for each region that is able to be set as the region where the service is used, and
a communication unit that is capable of communicating with the communication unit of the information processing apparatus, wherein
when receiving the service use request from the user, the processor of the information processing apparatus:
specifies a region where the user uses the service,
acquires, from the server via the communication unit of the information processing apparatus, the age range indicating the necessity of the notification processing associated with the specified region, and
determines whether or not the age of the user is within the predetermined age range, on a basis of the acquired age range indicating the necessity of the notification process, and
the server further includes a processor that executes, in response to a request from the information processing apparatus, processing of acquiring, from the region-specific age information stored in the storage, the age range indicating the necessity of the notification processing associated with the region specified by the processor of the information processing apparatus, and returning the acquired age range to the information processing apparatus via the communication unit of the server.

10. The information processing system according to claim 9, wherein
the notification processing executed by the processor of the information processing apparatus includes:
acquiring information indicating a destination of a notification to the guardian of the user, and
transmitting, to the server via the communication unit of the information processing apparatus, a notification request including the acquired information indicating the destination of the notification, and
the processor of the server makes a notification to the guardian on a basis of the information indicating the destination of the notification included in the notification request from the information processing apparatus.

11. An information processing method, wherein
a computer of an information processing apparatus, when receiving a service use request from a user, executes notification processing for notifying a guardian of the user that the user starts to use the service, when it is determined that an age of the user is within a predetermined age range.

12. A program for causing a computer of an information processing apparatus to execute:
when receiving a service use request from a user, notification processing for notifying a guardian of the user that the user starts to use the service, when it is determined that an age of the user is within a predetermined age range.
